# EUROPEAN PATENT APPLICATION

(11) **EP 4 550 680 A1**
(43) Date of publication of application: **07.05.2025**
(21) Application number: 24209881.2
(22) Date of filing: 30.10.2024
(51) Int. Cl.: H04B 7/0404, H04B 7/0413, H04B 7/0456, H04B 7/06

(54) **METHOD FOR SIMULTANEOUS MULTI-PANEL PUCCH**

(30) Priority: 02.11.2023 GB 202316786
(71) Applicant: Nokia Technologies Oy, 02610 Espoo (FI)
(72) Inventor: KARJALAINEN, Juha Pekka, Sotkamo (FI); HAKOLA, Sami-Jukka, Kempele (FI); KOSKELA, Timo, Oulu (FI)
(74) Representative: Nokia EPO representatives

(57) **Abstract**

An apparatus includes means for determining to use a set of transmit antenna arrangements for spatial division multiplexing or single frequency network based simultaneous transmission across multiple antenna arrangement physical uplink shared channel transmission; and means for determining to use the set of transmit antenna arrangements for a physical uplink control channel resource transmission, in response to two different transmission configuration indicator states being indicated and the apparatus being configured to apply physical uplink shared channel precoding for simultaneous transmission across multiple antenna arrangement physical uplink shared channel transmission.

## Description

### TECHNICAL FIELD

The examples and non-limiting example embodiments relate generally to communications and, more particularly, to a method for simultaneous multi-panel PUCCH.

### BACKGROUND

It is known for a communication device to gain access to a network via a transmission reception point in a communication network.

### SUMMARY

In accordance with an aspect, an apparatus includes means for obtaining, from a network device, precoding information related to at least one of one or more physical uplink control channel transmissions from one or more antenna arrangements of the apparatus or one or more spatial division multiplexing or single frequency network based physical uplink shared channel transmissions from one or more antenna arrangements of the apparatus; means for determining, based on the precoding information, that one or more precoders associated with the one or more spatial division multiplexing or single frequency network based physical uplink shared channel transmissions are to be applied to the one or more physical uplink control channel transmissions at the apparatus; and means for transmitting, to the network device, the one or more physical uplink control channel transmissions, using the one or more precoders.

In accordance with an aspect, an apparatus includes means for transmitting, to a terminal device, precoding information related to at least one of one or more physical uplink control channel transmissions from one or more antenna arrangements of the terminal device or one or more spatial division multiplexing or single frequency network based physical uplink shared channel transmissions from one or more antenna arrangements of the terminal device; and means for receiving, from the terminal device, the one or more physical uplink control channel transmissions with use of one or more precoders; wherein the one or more precoders are associated with the one or more spatial division multiplexing or single frequency network based physical uplink shared channel transmissions.

In accordance with an aspect, an apparatus includes means for determining to use a set of transmit antenna arrangements for spatial division multiplexing or single frequency network based simultaneous transmission across multiple antenna arrangement physical uplink shared channel transmission; and means for determining to use the set of transmit antenna arrangements for a physical uplink control channel resource transmission, in response to two different transmission configuration indicator states being indicated and the apparatus being configured to apply physical uplink shared channel precoding for simultaneous transmission across multiple antenna arrangement physical uplink shared channel transmission.

In accordance with an aspect, an apparatus includes means for configuring a user equipment to use a set of transmit antenna arrangements for spatial division multiplexing or single frequency network based simultaneous transmission across multiple antenna arrangement physical uplink shared channel transmission; and means for configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.

### BRIEF DESCRIPTION OF THE DRAWINGS

The foregoing aspects and other features are explained in the following description, taken in connection with the accompanying drawings.
FIG. 1 is a block diagram of one possible and non-limiting system in which the example embodiments may be practiced.
FIG. 2 shows a TCI framework providing UE information to estimate parameters related to the reception or the transmission of the downlink or uplink signal or channel.
FIG. 3 shows an example of simultaneous two-panel PUCCH transmission to two TRPs.
FIG. 4 shows an example of STxMP PUCCH when Follow-PUSCH-Prec in PUCCH-Resource set is 'Configured'.
FIG. 5 is an example apparatus configured to implement the examples described herein.
FIG. 6 shows a representation of an example of non-volatile memory media used to store instructions that implement the examples described herein.
FIG. 7 is an example method, based on the examples described herein.
FIG. 8 is an example method, based on the examples described herein.
FIG. 9 is an example method, based on the examples described herein.
FIG. 10 is an example method, based on the examples described herein.

### DETAILED DESCRIPTION OF EXAMPLE EMBODIMENTS

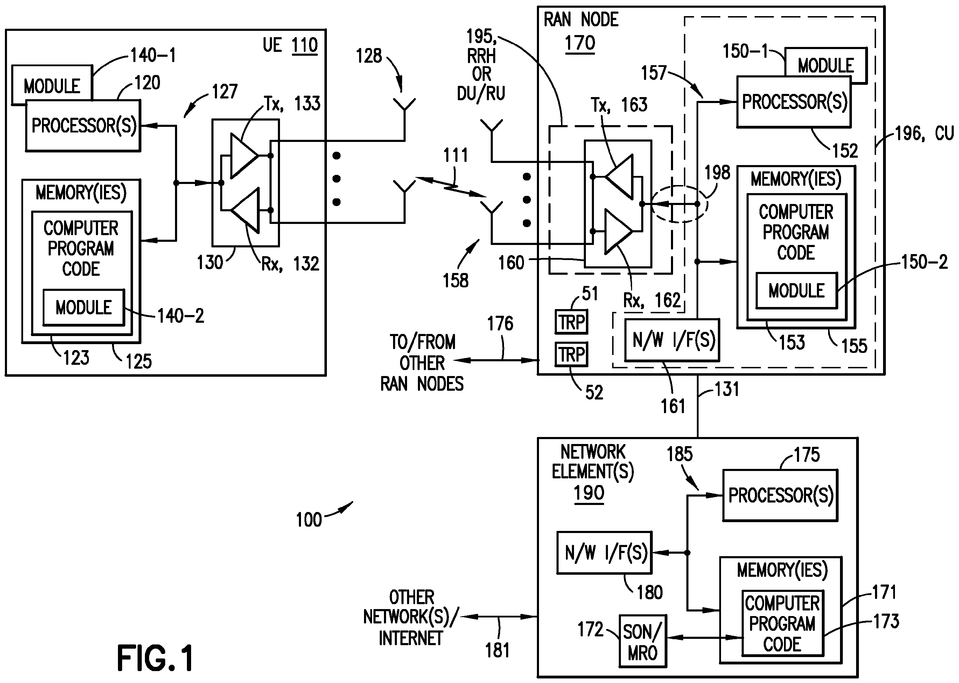

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access for wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, one or more memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

A RAN node / gNB can comprise one or more TRPs to which the methods described herein may be applied. FIG. 1 shows that the RAN node 170 comprises TRP 51 and TRP 52, in addition to the TRP represented by transceiver 160. Similar to transceiver 160, TRP 51 and TRP 52 may each include a transmitter and a receiver. The RAN node 170 may host or comprise other TRPs not shown in FIG. 1.

A relay node in NR is called an integrated access and backhaul node. A mobile termination part of the IAB node facilitates the backhaul (parent link) connection. In other words, the mobile termination part comprises the functionality which carries UE functionalities. The distributed unit part of the IAB node facilitates the so called access link (child link) connections (i.e. for access link UEs, and backhaul for other IAB nodes, in the case of multi-hop IAB). In other words, the distributed unit part is responsible for certain base station functionalities. The IAB scenario may follow the so called split architecture, where the central unit hosts the higher layer protocols to the UE and terminates the control plane and user plane interfaces to the 5G core network.

It is noted that the description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (mobility management entity)/SGW (serving gateway) functionality. Such core network functionality may include SON (self-organizing/optimizing network) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. Computer program code 173 may include SON and/or MRO functionality 172.

The wireless network 100 may implement network virtualization, which is the process of combining hardware and software network resources and network functionality into a single, software-based administrative entity, or a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback devices having wireless communication capabilities, internet appliances including those permitting wireless internet access and browsing, tablets with wireless communication capabilities, head mounted displays such as those that implement virtual/augmented/mixed reality, as well as portable units or terminals that incorporate combinations of such functions. The UE 110 can also be a vehicle such as a car, or a UE mounted in a vehicle, a UAV such as e.g. a drone, or a UE mounted in a UAV. The user equipment 110 may be terminal device, such as mobile phone, mobile device, sensor device etc., the terminal device being a device used by the user or not used by the user.

UE 110, RAN node 170, and/or network element(s) 190, (and associated memories, computer program code and modules) may be configured to implement (e.g. in part) the methods described herein. Thus, computer program code 123, module 140-1, module 140-2, and other elements/features shown in FIG. 1 of UE 110 may implement user equipment related aspects of the examples described herein. Similarly, computer program code 153, module 150-1, module 150-2, and other elements/features shown in FIG. 1 of RAN node 170 may implement gNB/TRP related aspects of the examples described herein. Computer program code 173 and other elements/features shown in FIG. 1 of network element(s) 190 may be configured to implement network element related aspects of the examples described herein.

Having thus introduced a suitable but non-limiting technical context for the practice of the example embodiments, the example embodiments are now described with greater specificity.

The examples described herein are related to 3GPP New Radio (NR) physical layer development in Rel-19 and onwards (e.g. 6G). More specifically, described herein is a new precoder indication method and corresponding UE transmission procedure for simultaneous multi-panel PUCCH transmissions with one or more transmission reception points (TRP)s where TRPs can be deployed in single (S)- DCI and multi- (m)-DCI manner.

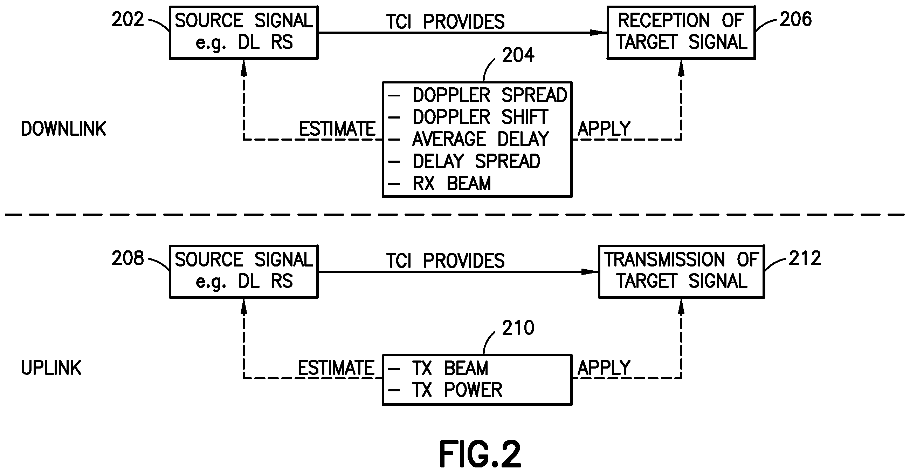

FIG. 2 depicts an example TCI framework that provides QCL relations between source (202, 208) and target (206, 212) signals. In this example TCI framework, a single TCI state can be indicated to UE and this TCI state or rather RS(s) indicated by the TCI State are used for transmission and reception assumptions for PDCCH/PDSCH/CSI-RS and/or PUCCH/PUSCH/SRS. Principle of providing UE with information to be able to estimate parameters (204, 210) related to the reception or the transmission of the downlink or uplink signal/channel, respectively, is shown in FIG. 2.

In this example TCI framework, the beam indication or rather TCI state indication (i.e. indication which TCI state is used for transmission and/or reception assumptions for signals and channels associated with the TCI State) has following steps (1-3):
1. For a serving cell, the TCI State type is configured to be either joint UL/DL or separate UL/DL. In joint UL/DL the indicated TCI State is used for uplink and downlink, and in separate the DL and UL are indicated separately (one TCI codepoint that is indicated in DCI may comprise DL TCI only, UL TCI only or DL and UL TCI states). If the TCI state type is joint, UE is configured with a single list of TCI states using RRC.
2. If the TCI state type is separate, UE is configured with a DL TCI State list and UL TCI State list. Configuration is done using RRC signaling while MAC CE selects and activates up to eight (in Rel-17) TCI codepoints of which one may become indicated via DCI. As said earlier, one TCI codepoint may comprise DL TCI state only, UL TCI state only or both DL and UL TCI states.
3. To indicate a TCI state (joint) or separate TCI States (UL and DL) network provides a TCI codepoint (a value in a DCI message) that corresponds to the TCI codepoint in the MAC CE that activated the TCI codepoint(s). Upon receiving the DCI based beam indication (a DCI codepoint) UE applies the indicated TCI States for the indicated channels (PDSCH/PDCCH/PUSCH/PUCCH)

In comparison to single (S)-DCI scheme, multi (M)-DCI based simultaneous uplink multi-panel PUSCH schemes with SDM and SFN may be used, targeting to enhance throughput and reliability with reduced latency.

In SDM-based scheme, different layers/DMRS ports of one PUSCH are separately precoded and transmitted from different UE panels simultaneously.

In SFN-based transmission scheme, all of the same layers/DMRS ports of one PUSCH transmission occasion are transmitted simultaneously with two different precoders from two different UE panels associated with different TCI states.

In both SDM and SFN with codebook-based precoding, the UE is provided with separate precoder matrix for each transmitting panel in DCI via two TPMI entries.

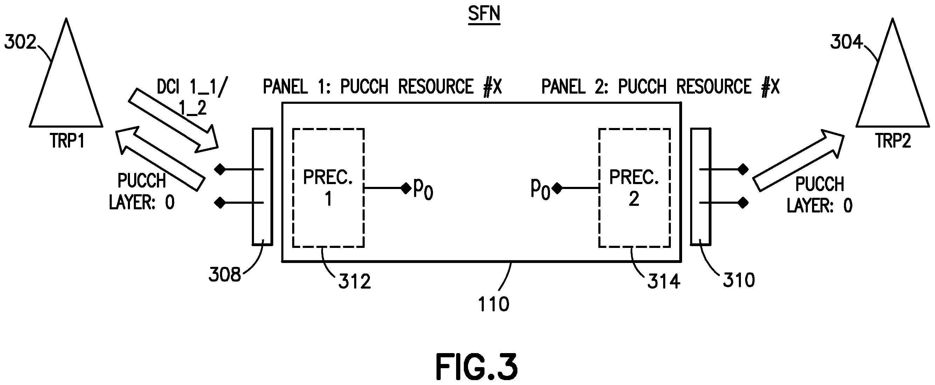

FIG. 3 shows an example of simultaneous multi-panel PUCCH transmission with two TRPs (TRP 302 and TRP 304) with two antenna panels (308, 310). As shown, downlink DCI, e.g. format 1_1/1_2, indicates TCI codepoint which consist of two TCI states (joint UL and DL or separate UL) associated with two different TRPs. The UE 110 may apply indicated TCI states (associated with codepoint value) for a single PUCCH resource with single layer multi-panel transmission towards to two different TRPs (303, 304). In principal, the UE can determine non-codebook based precoding based on the indicated TCI states where downlink NZP-CSI-RS/SSB resource is used as spatial QCL-'typeD' source for PUCCH resource. Therefore, a network does not have possibility to "control" applied precoding type (i.e. codebook/non-codebook) and precoding vectors associated with antenna panels for PUCCH transmission resulting potential PUCCH demodulation performance degradation e.g. in terms of coverage.

Since currently there is no mechanism for the network to control applied precoding antenna panel specifically or even possibility to "force" the use of precoding (e.g. with precoder 312 or precoder 314) for simultaneous PUCCH transmission, the demodulation and channel estimation performance may be degraded with respect to a case when the UE is "forced" to apply precoding for PUCCH. Moreover, especially at coverage limited scenarios, it may be beneficial for the network to control panel specific precoders (e.g. precoder 312 or precoder 314) of simultaneous PUCCH transmission for enabling enhanced channel estimation and demodulation performance of PUCCH. Therefore, the examples described herein address aforementioned problems and provide solutions accordingly.

Described herein is a new precoder indication method and corresponding UE transmission procedure for simultaneous multi-panel PUCCH transmission.

In an example embodiment, UE reports new capability information related to the support of codebook and/or non-codebook based simultaneous multi-panel PUCCH transmission.

In an example embodiment, UE is configured at higher layer to apply same uplink precoding for STxMP PUCCH with rank restriction, e.g. rank 1.

In one option, new Boolean information element, e.g., *follow-PUSCH-STxMP* (or alternatively, *follow-PUSCH-STxMP-Prec*) is configured in various parameters, e.g., higher layer parameter *PUCCH-Resource set* or *PUCCH-Resource* (i-iii): i) When *follow-PUSCH-STxMP-Prec* in *PUCCH-Resource Set* and *multipanelSfnScheme* in *PUCCH-Config* are configured, the UE shall apply same precoders associated with 1^{st} SRI and 2^{nd} SRI (non-codebook) or 1^{st} TPMI and 2^{nd} TPMI (codebook). In an example embodiment, the precoders are applied with rank restriction, e.g., rank 1 restriction (i.e. first layer of 1^{st} SRI and first layer of 2^{nd} SRI (non-codebook) and first layer of 1^{st} TPMI and first layer of 2^{nd} TPMI (codebook)) as in the most recent STxMP PUSCH transmission triggered by e.g., DCI 0_1/02 or configured grant type-1 or Type-2 w/ DCI activation independent of uplink STxMP scheme for PUSCH; ii) When *follow-PUSCH-STxMP-Prec* is configured in *PUCCH-Resource set,* all PUCCH resources in *PUCCH-Resource Set* are assumed to follow STxMP PUSCH precoding (as defined above); iii) When *follow-PUSCH-STxMP-Prec i*s configured in *PUCCH-Resource,* each PUCCH resource in *PUCCH-Resource Set* are assumed to follow independently STxMP PUSCH precoding (as defined above)

In another option, higher layer parameter *PUCCH-Resource set* or *PUCCH-Resource* is configured with new Boolean information element *follow-PUSCH-STxMP-Prec* and new information element *PUCCH-Prec-Type* configured as *'nonCodeBook'* or *'codebook'.* When *follow-PUSCH-STxMP* and *PUCCH-Prec-Type = 'nonCodebook'* are configured, the UE shall apply same precoders associated with 1^{st} SRI and 2^{nd} SRI (non-codebook) as in the most recent STxMP PUSCH transmission triggered by e.g., DCI 0_1/0_2 or configured grant type-1 or Type-2 w/ DCI activation. When *follow-PUSCH-STxMP* and *PUCCH-Prec-Type* = *'Codebook'* are configured, the UE shall apply same precoders associated with 1^{st} TPMI and 2^{nd} TPMI (codebook) as in the most recent STxMP PUSCH transmission triggered by e.g., DCI 0_1/0_2 or configured grant type-1 or Type-2 w/ DCI activation. In an example embodiment, the precoders are applied with rank restriction, e.g., rank 1 restriction.

In an example embodiment, lower layer parameters may be used, such as for example, MAC-CE or DCI. For example, when UE 110 receives both DCI 1_1/1_2 with indicated UL TCI states and DCI 0_1/0_2 with first SRI, second SRI and/or first TPMI and second TPMI within N consecutive slots in time, where N is configured by the network, the UE is implicitly indicated to apply same precoding (described in a previous embodiment) for STxMP PUCCH resource transmission as for most recent SDM/SFN based STxMP PUSCH.

In another example, when the UE receives DCI 1_1/1_2 with indicated UL TCI states and a new codepoint *follow-PUSCH-STxMP* with value *'TRUE",* the UE is explicitly indicated to apply same precoding (described in a previous embodiment) for STxMP PUCCH resource transmission as for most recent SDM/SFN based STxMP PUSCH.

In one implementation an example of possible implementation of TS 38.331 specification with proposed amendments (marked within /* */) in PUCCH-ResourceSet with PUCCH-config is defined. The IE *PUCCH-Config* is used to configure the UE specific PUCCH parameters applicable to a particular BWP.

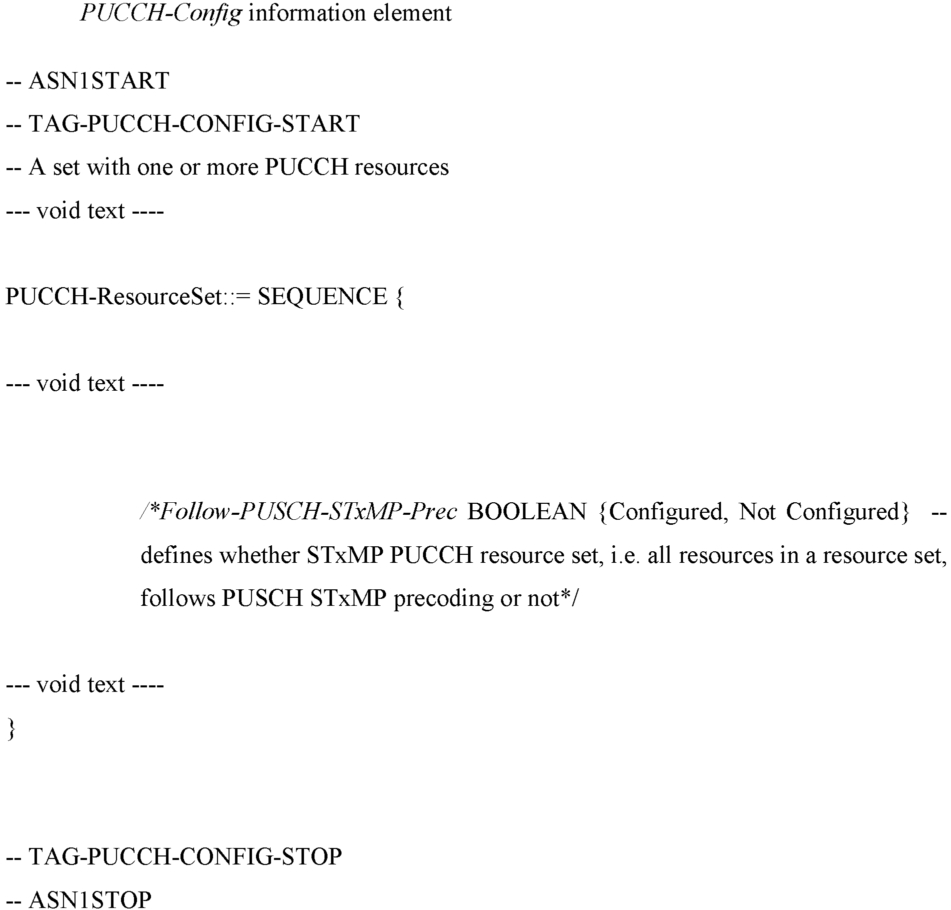

In another alternative implementation example of possible implementation of TS 38.331 specification with proposed amendments (marked within /* */) in *PUCCH-Config with* PUCCH-Resource Is defined.

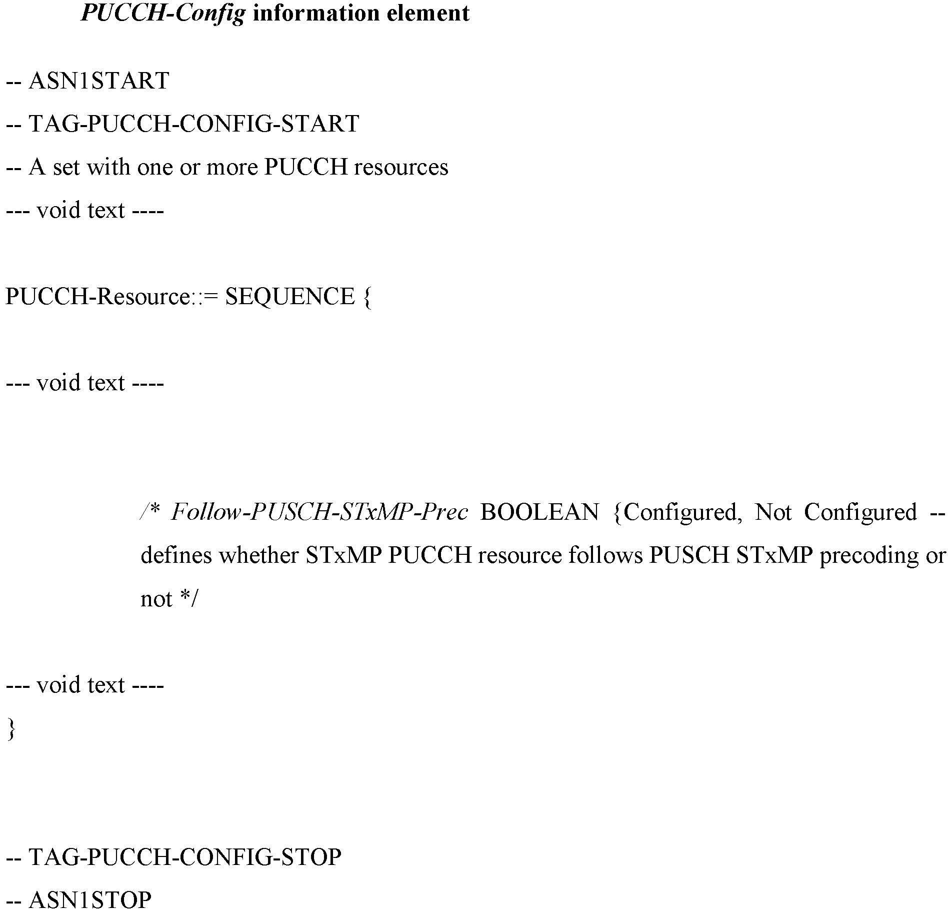

In an example embodiment, the transmission of the one or more physical uplink control channels using one or more precoders associated with SDM/SFN based STxMP PUSCH is with or without repetition, based on configuration. In an example embodiment, the UE receives the configuration from the network.

It is noted that PUCCH resources may have same or different periodicities and various PUCCH formats may be defined in terms of physical resource allocation, number of bits, etc.

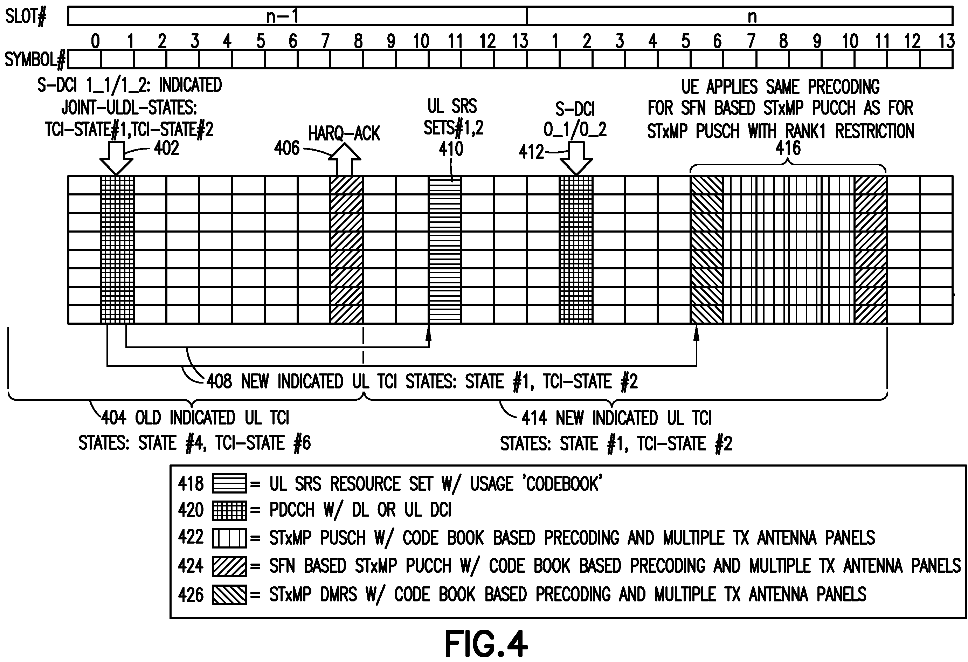

FIG. 4 shows an example of simultaneous multi-panel PUCCH transmission with follow-PUSCH in PUCCH-ResourceSet configured. When *follow-PUSCH-STxMP-Prec* in *PUCCH-Resource Set and multipanelSfnScheme* in *PUCCH-Config* are configured, the UE shall apply same precoders associated with 1^{st} TPMI and 2^{nd} TPMI (codebook) with rank 1 restriction (first layer of 1^{st} TPMI and first layer of 2^{nd} TPMI codebook) as in the most recent STxMP PUSCH transmission triggered by DCI 0_1/0_2.

As shown in FIG. 4, joint UL and DL states are indicated at 402 via downlink control information (S-DCI 1_1/1_2), the states being TCI state #1 and TCI state #2. Item 404 shows old indicated states including TCI state #4 and TCI state #6. A HARQ-ACK is indicated at 406, and UL SRS sets #1 and #2 is shown at 410. Item 408 shows the transition to the newly indicated UL TCI states, namely TCI state #1 and TCI state #2. At 412, downlink control information is received (e.g. S-DCI 0_1/0_2). Item 414 shows the application of the newly indicated TCI states, namely TCI state #1 and TCI state #2. At 416, the UE applies the same precoding for STxMP PUCCH as for STxMP PUSCH with rank 1 restriction. The legend of FIG. 4 shows UL SRS resource set with usage 'codebook' (418), PDCCH with DL or UL DCI (420), STxMP PUSCH with codebook based precoding and multiple TX antenna panels (422), STxMP PUCCH with codebook based precoding multiple TX antenna panels (424), and STxMP DMRS with codebook based precoding and multiple TX antenna panels (426).

In one implementation, upon reception of SRIs for the SDM or SFN based simultaneous PUSCH transmissions, the UE stores the first column of the corresponding precoder matrices (1^{st} layer) into the memory. For the next PUCCH transmission the UE fetches the precoders from the memory and applies the precoding vectors for the corresponding PUCCH transmissions.

When PUSCH TXConfig configured with 'nonCodebook' and PUCCH-Config with multipanelsfnScheme 'configured' and DCI 1_1/1_2 has been detected, the UE determines its antenna panel specific precoders for PUCCH transmission separately based on computed channel estimates associated with downlink reference signal resource (e.g. NZP-CSI-RS or SSB) associated with indicated TCI state. Due to UE specific implementation impairments, the channel reciprocity between downlink and uplink does not fully hold. Received signal experiences equal signal strength across different RF RX paths associated with each antenna panel. However, this is not the case with simultaneous uplink transmission across different antenna panels. The reason for this is that, for example, one or more TX antenna panels with RF branches associated with antenna port of uplink reference signals and/or uplink data (e.g. PUSCH) or control channel (e.g. PUCCH) may share one PA. Since there is a different physical distance between PA and output of RF TX antenna connectors, there may be different insertion (simply due to wiring) and/or other implementation specific losses, resulting in a power imbalance of between transmitted signals via different antenna panels. To compensate this imbalance in simultaneous uplink transmission, the UE shall apply additional antenna panel specific TX power to compensate implementation specific insertion loss associated with each antenna panel. This additional antenna panel specific TX power "correction/compensation" cannot be obtained via standardized downlink reference signal resource measurement associated with pathloss estimates used in standardized uplink TX power control method. Additionally, a network assumes that power imbalance does not exist and it is not known by a network by any means or signaling. Therefore, to enable common understanding of nominal TX power between UE and network, the UE shall perform TX power "compensation/equalization" for implementation specific attenuations/insertion losses between different antenna panels. Of course, actual applied output power of the each antenna may be different to different pathloss gains associated between different TX antenna panels and targeted TRPs/RX panels at network side (i.e. reference signal resources associated with indicated TCI states). To apply implementation specific TX power compensation/equalization between different antenna panels used for simultaneous PUCCH transmission the following UE steps needs to performed (Steps 1-6):
Step 1: The UE has understanding of implementation specific power/insertion losses between different TX antenna panels. These values have been obtained, e.g. during the manufacturing phase of the UE/device or there is some UE implementation specific measurement inside the UE. Once values are known by the UE, values have been stored into UE's memory.
Step 2: UE determines different TX antenna panel pair combinations out of all TX antenna panels and selects for each antenna panel pair one "anchor/primary" antenna panel and one secondary antenna panel and computes relative power difference between antenna panels within the pair. For example, for one antenna panel pair there antenna panel 1 as primary and antenna panel 2 as secondary panel where panel 2 has 3 dB loss w.r.t. panel 1. For each antenna panel pair, the UE also computes power difference w.r.t the best antenna panel across all antenna panels. Alternatively, the UE selects one primary antenna panel among all antenna panels which has the smallest implementation/insertion loss among all antenna panels. Then, for each antenna panel pair, power difference w.r.t. the primary antenna panel is computed for both antenna panels within the pair. In both cases, these values are stored into UE's memory for each pair.
Step 3: The UE computes pathloss estimates for each TX antenna panel based on DL RS resource for pathloss reference associated with each indicated TCI state without assuming any implementation losses.
Step 4: When two different TCI states are indicated and the UE is configured to apply PUSCH precoding for STxMP PUCCH, the UE applies the same TX antenna panels for a single PUCCH resource as for SDM/SFN based STxMP PUSCH transmission. Before applying rank 1 restricted different precoders of STxMP PUSCH for each antenna panel, the UE computes new pathloss estimates adding antenna panel specific implementation loss w.r.t the primary antenna panel (either global over all antenna panels or local within pair) into computed pathloss value (e.g. new antenna panel specific pathloss value = antenna panel specific pathloss value + antenna panel specific implementation loss [in dB]) computed in step 3.
   In general, when two different TCI states are indicated and the UE is configured to apply PUSCH precoding for simultaneous transmission across multiple antenna arrangement PUCCH transmission, the UE applies the same TX antenna arrangements for a single PUCCH resource as for SDM/SFN based simultaneous transmission across multiple antenna arrangement PUSCH transmission. The antenna arrangements (including those for the simultaneous transmission across multiple antenna arrangement PUSCH transmission and for the simultaneous transmission across multiple antenna arrangement PUCCH transmission) may include one or more antenna panels, or the antenna arrangements (including those for the simultaneous transmission across multiple antenna arrangement PUSCH transmission and for the simultaneous transmission across multiple antenna arrangement PUCCH transmission) may include one or more transmission configuration indicator states.
Step 5: The applies new antenna panel specific "equalized/corrected" pathloss value computed in Step 4 into antenna panel specific (i.e. per TCI state) UL power control equation for PUCCH (taking into account also PRBs associated with PUCCH). This step is computed for both antenna panels associated with antenna panel pair.
Step 6: UE computes the total PUCCH TX power by summing up both antenna panel specific power values (computed in step 5) and check that the total TX power of PUCCH over both antenna panels does not exceed the total uplink power budget of PUCCH transmission. If computed the total power is less than that the total TX power budget of PUCCH transmission, the UE shall apply computed uplink power control values for both indicated TCI states and single PUCCH transmission, else the UE applies only first indicated TCI state and corresponding computed uplink power control value in step 5 for single antenna panel PUCCH transmission.

In one alternative implementation approach, the UE scales the elements of antenna panel specific precoder vectors by antenna panel specific implementation value (i.e. scalar value) instead of equalization/correction of uplink power control.

There are several technical effects of the examples described herein. The method described herein enables network to fully control whether to use precoding or not and its precoding type (codebook/non-codebook) for STxMP for S-DCI and M-DCI deployments. For codebook based PUCCH, the method enables to know exactly what kind of precoding vectors are applied for PUCCH precoding. As a result of this, this enables further flexibility for network scheduler for pairing of different UEs with same time and frequency resources. From UE perspective, the herein described idea simplifies STxMP PUCCH operation. The herein described method is applicable for S-DCI and M-DCI deployments.

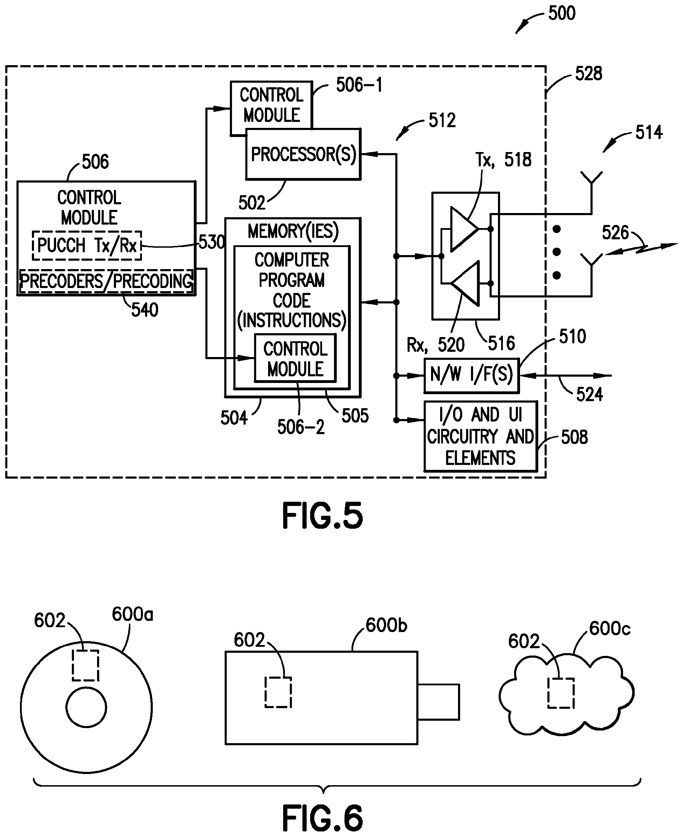

FIG. 5 is an example apparatus 500, which may be implemented in hardware, configured to implement the examples described herein. The apparatus 500 comprises at least one processor 502 (e.g. an FPGA and/or CPU), one or more memories 504 including computer program code 505, the computer program code 505 having instructions to carry out the methods described herein, wherein the at least one memory 504 and the computer program code 505 are configured to, with the at least one processor 502, cause the apparatus 500 to implement circuitry, a process, component, module, or function (implemented with control module 506) to implement the examples described herein. The memory 504 may be a non-transitory memory, a transitory memory, a volatile memory (e.g. RAM), or a non-volatile memory (e.g. ROM). Optionally included PUCCH Tx/Rx 530 of the control module implements the herein described method for simultaneous multi-panel PUCCH. Optionally included precoders/precoding 540 implements the herein described aspects related to application of and configuration of precoders and precoding information.

The apparatus 500 includes a display and/or I/O interface 508, which includes user interface (UI) circuitry and elements, that may be used to display aspects or a status of the methods described herein (e.g., as one of the methods is being performed or at a subsequent time), or to receive input from a user such as with using a keypad, camera, touchscreen, touch area, microphone, biometric recognition, one or more sensors, etc. The apparatus 500 includes one or more communication e.g. network (N/W) interfaces (I/F(s)) 510. The communication I/F(s) 510 may be wired and/or wireless and communicate over the Internet/other network(s) via any communication technique including via one or more links 524. The link(s) 524 may be the link(s) 131 and/or 176 from FIG. 1. The link(s) 131 and/or 176 from FIG. 1 may also be implemented using transceiver(s) 516 and corresponding wireless link(s) 526. The communication I/F(s) 510 may comprise one or more transmitters or one or more receivers.

The transceiver 516 comprises one or more transmitters 518 and one or more receivers 520. The transceiver 516 and/or communication I/F(s) 510 may comprise standard well-known components such as an amplifier, filter, frequency-converter, (de)modulator, and encoder/decoder circuitries and one or more antennas, such as antennas 514 used for communication over wireless link 526.

The control module 506 of the apparatus 500 comprises one of or both parts 506-1 and/or 506-2, which may be implemented in a number of ways. The control module 506 may be implemented in hardware as control module 506-1, such as being implemented as part of the one or more processors 502. The control module 506-1 may be implemented also as an integrated circuit or through other hardware such as a programmable gate array. In another example, the control module 506 may be implemented as control module 506-2, which is implemented as computer program code (having corresponding instructions) 505 and is executed by the one or more processors 502. For instance, the one or more memories 504 store instructions that, when executed by the one or more processors 502, cause the apparatus 500 to perform one or more of the operations as described herein. Furthermore, the one or more processors 502, the one or more memories 504, and example algorithms (e.g., as flowcharts and/or signaling diagrams), encoded as instructions, programs, or code, are means for causing performance of the operations described herein.

The apparatus 500 to implement the functionality of control 506 may be UE 110, RAN node 170 (e.g. gNB), or network element(s) 190 (e.g. LMF 190). Thus, processor 502 may correspond to processor(s) 120, processor(s) 152 and/or processor(s) 175, memory 504 may correspond to one or more memories 125, one or more memories 155 and/or one or more memories 171, computer program code 505 may correspond to computer program code 123, computer program code 153, and/or computer program code 173, control module 506 may correspond to module 140-1, module 140-2, module 150-1, and/or module 150-2, and communication I/F(s) 510 and/or transceiver 516 may correspond to transceiver 130, antenna(s) 128, transceiver 160, antenna(s) 158, N/W I/F(s) 161, and/or N/W I/F(s) 180. Alternatively, apparatus 500 and its elements may not correspond to either of UE 110, RAN node 170, or network element(s) 190 and their respective elements, as apparatus 500 may be part of a self-organizing/optimizing network (SON) node or other node, such as a node in a cloud.

Apparatus 500 may also correspond to TRP 1 302 or TRP 2 304. Apparatus 500 may be a smartphone. UE 110 may be a smartphone.

The apparatus 500 may also be distributed throughout the network (e.g. 100) including within and between apparatus 500 and any network element (such as a network control element (NCE) 190 and/or the RAN node 170 and/or UE 110).

Interface 512 enables data communication and signaling between the various items of apparatus 500, as shown in FIG. 5. For example, the interface 512 may be one or more buses such as address, data, or control buses, and may include any interconnection mechanism, such as a series of lines on a motherboard or integrated circuit, fiber optics or other optical communication equipment, and the like. Computer program code (e.g. instructions) 505, including control 506 may comprise object-oriented software configured to pass data or messages between objects within computer program code 505. The apparatus 500 need not comprise each of the features mentioned, or may comprise other features as well. The various components of apparatus 500 may at least partially reside in a common housing 528, or a subset of the various components of apparatus 500 may at least partially be located in different housings, which different housings may include housing 528.

FIG. 6 shows a schematic representation of non-volatile memory media 600a (e.g. computer/compact disc (CD) or digital versatile disc (DVD)) and 600b (e.g. universal serial bus (USB) memory stick) and 600c (e.g. cloud storage for downloading instructions and/or parameters 602 or receiving emailed instructions and/or parameters 602) storing instructions and/or parameters 602 which when executed by a processor allows the processor to perform one or more of the steps of the methods described herein. Instructions and/or parameters 602 may represent a non-transitory computer readable medium.

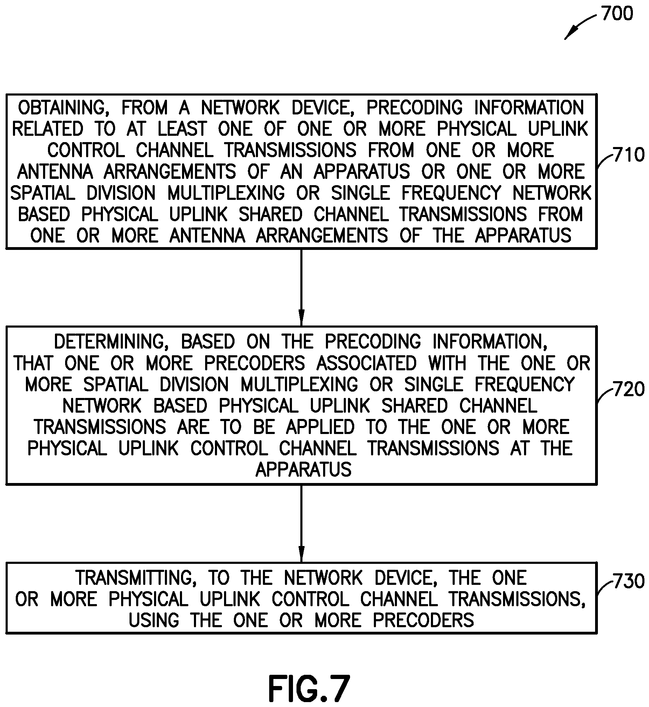

FIG. 7 is an example method 700, based on the example embodiments described herein. At 710, the method includes obtaining, from a network device, precoding information related to at least one of one or more physical uplink control channel transmissions from one or more antenna arrangements of an apparatus or one or more spatial division multiplexing or single frequency network based physical uplink shared channel transmissions from one or more antenna arrangements of the apparatus. At 720, the method includes determining, based on the precoding information, that one or more precoders associated with the one or more spatial division multiplexing or single frequency network based physical uplink shared channel transmissions are to be applied to the one or more physical uplink control channel transmissions at the apparatus. At 730, the method includes transmitting, to the network device, the one or more physical uplink control channel transmissions, using the one or more precoders. Method 700 may be performed with UE 110 or apparatus 500.

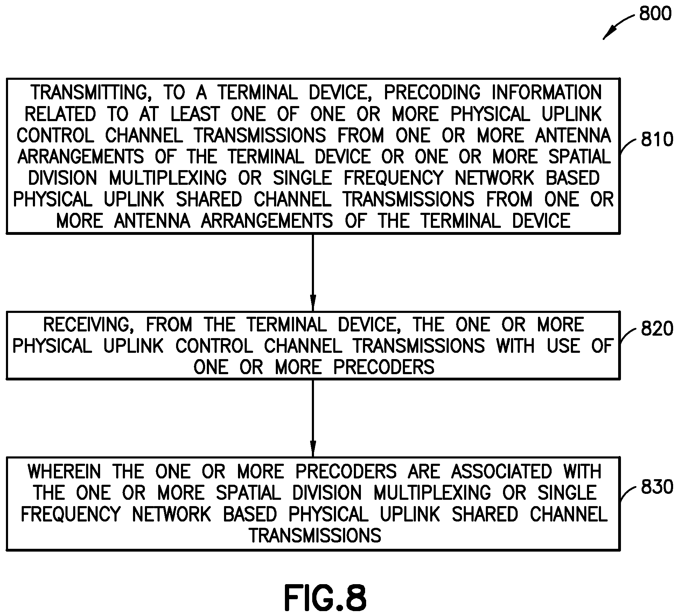

FIG. 8 is an example method 800, based on the example embodiments described herein. At 810, the method includes transmitting, to a terminal device, precoding information related to at least one of one or more physical uplink control channel transmissions from one or more antenna arrangements of the terminal device or one or more spatial division multiplexing or single frequency network based physical uplink shared channel transmissions from one or more antenna arrangements of the terminal device. At 820, the method includes receiving, from the terminal device, the one or more physical uplink control channel transmissions with use of one or more precoders. At 830, the method includes wherein the one or more precoders are associated with the one or more spatial division multiplexing or single frequency network based physical uplink shared channel transmissions. Method 800 may be performed with RAN node 170, TRP1 302, TRP2 304, or apparatus 500.

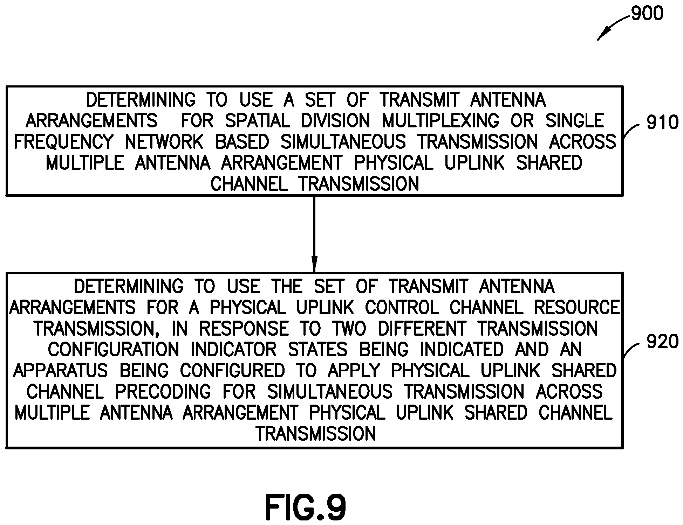

FIG. 9 is an example method 900, based on the example embodiments described herein. At 910, the method includes determining to use a set of transmit antenna arrangements for spatial division multiplexing or single frequency network based simultaneous transmission across multiple antenna arrangement physical uplink shared channel transmission. At 920, the method includes determining to use the set of transmit antenna arrangements for a physical uplink control channel resource transmission, in response to two different transmission configuration indicator states being indicated and an apparatus being configured to apply physical uplink shared channel precoding for simultaneous transmission across multiple antenna arrangement physical uplink shared channel transmission. Method 900 may be performed with UE 110 or apparatus 500.

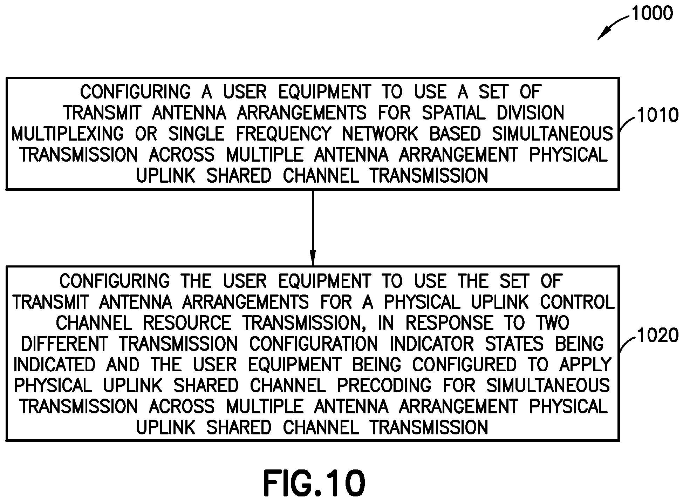

FIG. 10 is an example method 1000, based on the example embodiments described herein. At 1010, the method includes configuring a user equipment to use a set of transmit antenna arrangements for spatial division multiplexing or single frequency network based simultaneous transmission across multiple antenna arrangement physical uplink shared channel transmission. At 1020, the method includes configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission. Method 1000 may be performed with RAN node 170, TRP1 302, TRP2 304, or apparatus 500.

The following examples are provided and described herein.

Example 1. An apparatus including: means for obtaining, from a network device, precoding information related to at least one of one or more physical uplink control channel transmissions from one or more antenna arrangements of the apparatus or one or more spatial division multiplexing or single frequency network based physical uplink shared channel transmissions from one or more antenna arrangements of the apparatus; means for determining, based on the precoding information, that one or more precoders associated with the one or more spatial division multiplexing or single frequency network based physical uplink shared channel transmissions are to be applied to the one or more physical uplink control channel transmissions at the apparatus; and means for transmitting, to the network device, the one or more physical uplink control channel transmissions, using the one or more precoders.

Example 2. The apparatus of example 1, wherein at least one or more of the following applies: the one or more antenna arrangements comprise one or more antenna panels, or the one or more antenna arrangements comprise one or more transmission configuration indicator states.

Example 3. The apparatus of any of examples 1 to 2, further including: means for transmitting, to the network device, user equipment capability information related to support of codebook and/or non-codebook based physical uplink control channel transmissions from one or more antenna arrangements of the apparatus.

Example 4. The apparatus of any of examples 1 to 3, wherein the precoding information is obtained via at least one of one or more radio resource control messages, one or more medium access control control elements, or one or more downlink control information via physical layer signaling.

Example 5. The apparatus of any of examples 1 to 4, wherein the precoding information comprises an indication indicating that one or more precoders associated with the one or more spatial division multiplexing or single frequency network based physical uplink shared channel transmissions are to be applied to the one or more physical uplink control channel transmissions at the apparatus.

Example 6. The apparatus of any of examples 1 to 5, wherein the precoding information comprises information related to at least one of a first sounding reference signal resource identity, a second sounding reference signal resource identity and/or a first transmit precoding matrix identity and a second transmit precoding matrix identity associated with the one or more spatial division multiplexing or single frequency network based physical uplink shared channel transmissions.

Example 7. The apparatus of any of examples 1 to 6, wherein the transmission of the one or more physical uplink control channels using the one or more precoders is with or without repetition.

Example 8. The apparatus of any of examples 1 to 7, wherein the precoding information comprises a Boolean follow physical uplink shared channel simultaneous transmission across multi-panel precoder information element.

Example 9. The apparatus of example 8, wherein the precoders are applied to a simultaneous transmission across multi-panel physical uplink control channel transmission, in response to the Boolean follow physical uplink shared channel simultaneous transmission across multi-panel precoder information element being configured.

Example 10. The apparatus of example 9, wherein the simultaneous transmission across multi-panel physical uplink control channel transmission is associated with at least one or more of: a first sounding reference signal resource indicator and a second sounding reference signal resource indicator, or a first layer of the first sounding reference signal resource indicator or a first layer of the second sounding reference signal resource indicator, or a first transmit precoding matrix identity or a second transmit precoding matrix identity, or a first layer of the first transmit precoding matrix identity or a first layer of the second transmit precoding matrix identity.

Example 11. The apparatus of any of examples 8 to 10, further including: means for determining that physical uplink control channel resources in a physical uplink control channel resource set follow simultaneous transmission across multi-panel physical uplink shared channel precoding, in response to the Boolean follow physical uplink shared channel simultaneous transmission across multi-panel precoder information element being configured within a physical uplink control channel resource set parameter (the physical uplink control channel resource set parameter may be configured as a syntax element).

Example 12. The apparatus of any of examples 8 to 11, further including: means for determining that a physical uplink control channel resource in a physical uplink control channel resource set follows simultaneous transmission across multi-panel physical uplink shared channel precoding independent of other physical uplink control channel resources in the physical uplink control channel resource set, in response to the Boolean follow physical uplink shared channel simultaneous transmission across multi-panel precoder information element being configured within a physical uplink control channel resource parameter (the physical uplink control channel resource parameter may be configured as a syntax element).

Example 13. The apparatus of any of examples 11 to 12, wherein different physical uplink control channel resources have same or different formats and/or periodicities.

Example 14. The apparatus of any of examples 8 to 13, further including: means for determining whether a physical uplink control channel precoder type information element is configured as non-codebook or codebook.

Example 15. The apparatus of example 14, wherein: the precoders associated with a simultaneous transmission across multi-panel physical uplink shared channel transmission are applied to a non-codebook first sounding reference signal resource indicator and non-codebook second sounding reference signal resource indicator transmission, in response to the Boolean follow physical uplink shared channel simultaneous transmission across multi-panel precoder information element being configured and the physical uplink control channel precoder type information element being configured as non-codebook; and the precoders associated with the simultaneous transmission across multi-panel physical uplink shared channel transmission are applied to a codebook first transmit precoding matrix identity and codebook second transmit precoding matrix identity transmission, in response to the Boolean follow physical uplink shared channel simultaneous transmission across multi-panel precoder information element being configured and the physical uplink control channel precoder type information element being configured as codebook.

Example 16. The apparatus of any of examples 1 to 15, wherein the precoding information comprises a follow physical uplink shared channel simultaneous transmission across multi-panel information element that is set to true.

Example 17. The apparatus of any of examples 1 to 16, wherein the one or more precoders are applied with rank 1 restriction.

Example 18. The apparatus of any of examples 1 to 17, wherein the apparatus comprises a terminal device.

Example 19. The apparatus of any of examples 1 to 18, wherein the apparatus comprises a user equipment.

Example 20. An apparatus including: means for transmitting, to a terminal device, precoding information related to at least one of one or more physical uplink control channel transmissions from one or more antenna arrangements of the terminal device or one or more spatial division multiplexing or single frequency network based physical uplink shared channel transmissions from one or more antenna arrangements of the terminal device; and means for receiving, from the terminal device, the one or more physical uplink control channel transmissions with use of one or more precoders; wherein the one or more precoders are associated with the one or more spatial division multiplexing or single frequency network based physical uplink shared channel transmissions.

Example 21. The apparatus of example 20, wherein at least one or more of the following applies: the one or more antenna arrangements comprise one or more antenna panels, or the one or more antenna arrangements comprise one or more transmission configuration indicator states.

Example 22. The apparatus of any of examples 20 to 21, further including: means for receiving, from the terminal device, user equipment capability information related to support of codebook and/or non-codebook based physical uplink control channel transmissions from one or more antenna arrangements of the terminal device.

Example 23. The apparatus of any of examples 20 to 22, wherein the precoding information is transmitted via at least one of one or more radio resource control messages, one or more medium access control control elements, or one or more downlink control information via physical layer signaling.

Example 24. The apparatus of any of examples 20 to 23, wherein the precoding information comprises an indication indicating that one or more precoders associated with the one or more spatial division multiplexing or single frequency network based physical uplink shared channel transmissions are to be applied to the one or more physical uplink control channel transmissions.

Example 25. The apparatus of any of examples 20 to 24, wherein the precoding information comprises information related to at least one of a first sounding reference signal resource identity, a second sounding reference signal resource identity and/or a first transmit precoding matrix identity and a second transmit precoding matrix identity associated with the one or more spatial division multiplexing or single frequency network based physical uplink shared channel transmissions.

Example 26. The apparatus of any of examples 20 to 25, further including: means for configuring the terminal device to perform the one or more physical uplink control channel transmissions with use of one or more precoders with or without repetition.

Example 27. The apparatus of any of examples 20 to 26, wherein the precoding information comprises a Boolean follow physical uplink shared channel simultaneous transmission across multi-panel precoder information element.

Example 28. The apparatus of example 27, wherein the precoders are applied to a simultaneous transmission across multi-panel physical uplink control channel transmission, when the Boolean follow physical uplink shared channel simultaneous transmission across multi-panel precoder information element is configured.

Example 29. The apparatus of example 28, wherein the simultaneous transmission across multi-panel physical uplink control channel transmission is associated with at least one or more of: a first sounding reference signal resource indicator and a second sounding reference signal resource indicator, or a first layer of the first sounding reference signal resource indicator or a first layer of the second sounding reference signal resource indicator, or a first transmit precoding matrix identity or a second transmit precoding matrix identity, or a first layer of the first transmit precoding matrix identity or a first layer of the second transmit precoding matrix identity.

Example 30. The apparatus of any of examples 27 to 29, wherein physical uplink control channel resources in a physical uplink control channel resource set follow simultaneous transmission across multi-panel physical uplink shared channel precoding, when the Boolean follow physical uplink shared channel simultaneous transmission across multi-panel precoder information element is configured within a physical uplink control channel resource set parameter (the physical uplink control channel resource set parameter may be configured as a syntax element).

Example 31. The apparatus of any of examples 27 to 30, wherein a physical uplink control channel resource in a physical uplink control channel resource set follows simultaneous transmission across multi-panel physical uplink shared channel precoding independent of other physical uplink control channel resources in the physical uplink control channel resource set, when the Boolean follow physical uplink shared channel simultaneous transmission across multi-panel precoder information element is configured within a physical uplink control channel resource parameter (the physical uplink control channel resource parameter may be configured as a syntax element).

Example 32. The apparatus of any of examples 31 to 31, wherein different physical uplink control channel resources have same or different formats and/or periodicities.

Example 33. The apparatus of any of examples 27 to 32, further including: means for configuring a physical uplink control channel precoder type information element as non-codebook or codebook.

Example 34. The apparatus of example 33, wherein: the precoders associated with a simultaneous transmission across multi-panel physical uplink shared channel transmission are applied to a non-codebook first sounding reference signal resource indicator and non-codebook second sounding reference signal resource indicator transmission, when the Boolean follow physical uplink shared channel simultaneous transmission across multi-panel precoder information element is configured and the physical uplink control channel precoder type information element being is configured as non-codebook; and the precoders associated with the simultaneous transmission across multi-panel physical uplink shared channel transmission are applied to a codebook first transmit precoding matrix identity and codebook second transmit precoding matrix identity transmission, when the Boolean follow physical uplink shared channel simultaneous transmission across multi-panel precoder information element is configured and the physical uplink control channel precoder type information element is configured as codebook.

Example 35. The apparatus of any of examples 20 to 34, wherein the precoding information comprises a follow physical uplink shared channel simultaneous transmission across multi-panel information element that is set to true.

Example 36. The apparatus of any of examples 20 to 35, wherein the one or more precoders are applied with rank 1 restriction.

Example 37. The apparatus of any of examples 20 to 36, wherein the apparatus comprises a transmission reception point.

Example 38. The apparatus of any of examples 20 to 37, wherein the apparatus comprises a radio access network node.

Example 39. An apparatus including: at least one processor; and at least one memory storing instructions that, when executed by the at least one processor, cause the apparatus at least to: obtain, from a network device, precoding information related to at least one of one or more physical uplink control channel transmissions from one or more antenna arrangements of the apparatus or one or more spatial division multiplexing or single frequency network based physical uplink shared channel transmissions from one or more antenna arrangements of the apparatus; determine, based on the precoding information, that one or more precoders associated with the one or more spatial division multiplexing or single frequency network based physical uplink shared channel transmissions are to be applied to the one or more physical uplink control channel transmissions at the apparatus; and transmit, to the network device, the one or more physical uplink control channel transmissions, using the one or more precoders.

Example 40. An apparatus including: at least one processor; and at least one memory storing instructions that, when executed by the at least one processor, cause the apparatus at least to: transmit, to a terminal device, precoding information related to at least one of one or more physical uplink control channel transmissions from one or more antenna arrangements of the terminal device or one or more spatial division multiplexing or single frequency network based physical uplink shared channel transmissions from one or more antenna arrangements of the terminal device; and receive, from the terminal device, the one or more physical uplink control channel transmissions with use of one or more precoders; wherein the one or more precoders are associated with the one or more spatial division multiplexing or single frequency network based physical uplink shared channel transmissions.

Example 41. A method including: obtaining, from a network device, precoding information related to at least one of one or more physical uplink control channel transmissions from one or more antenna arrangements of an apparatus or one or more spatial division multiplexing or single frequency network based physical uplink shared channel transmissions from one or more antenna arrangements of the apparatus; determining, based on the precoding information, that one or more precoders associated with the one or more spatial division multiplexing or single frequency network based physical uplink shared channel transmissions are to be applied to the one or more physical uplink control channel transmissions at the apparatus; and transmitting, to the network device, the one or more physical uplink control channel transmissions, using the one or more precoders.

Example 42. A method including: transmitting, to a terminal device, precoding information related to at least one of one or more physical uplink control channel transmissions from one or more antenna arrangements of the terminal device or one or more spatial division multiplexing or single frequency network based physical uplink shared channel transmissions from one or more antenna arrangements of the terminal device; and receiving, from the terminal device, the one or more physical uplink control channel transmissions with use of one or more precoders; wherein the one or more precoders are associated with the one or more spatial division multiplexing or single frequency network based physical uplink shared channel transmissions.

Example 43. A computer readable medium including instructions stored thereon for performing at least the following: obtaining, from a network device, precoding information related to at least one of one or more physical uplink control channel transmissions from one or more antenna arrangements of an apparatus or one or more spatial division multiplexing or single frequency network based physical uplink shared channel transmissions from one or more antenna arrangements of the apparatus; determining, based on the precoding information, that one or more precoders associated with the one or more spatial division multiplexing or single frequency network based physical uplink shared channel transmissions are to be applied to the one or more physical uplink control channel transmissions at the apparatus; and transmitting, to the network device, the one or more physical uplink control channel transmissions, using the one or more precoders.

Example 44. A computer readable medium including instructions stored thereon for performing at least the following: transmitting, to a terminal device, precoding information related to at least one of one or more physical uplink control channel transmissions from one or more antenna arrangements of the terminal device or one or more spatial division multiplexing or single frequency network based physical uplink shared channel transmissions from one or more antenna arrangements of the terminal device; and receiving, from the terminal device, the one or more physical uplink control channel transmissions with use of one or more precoders; wherein the one or more precoders are associated with the one or more spatial division multiplexing or single frequency network based physical uplink shared channel transmissions.

Example 45. An apparatus including: means for determining to use a set of transmit antenna arrangements for spatial division multiplexing or single frequency network based simultaneous transmission across multiple antenna arrangement physical uplink shared channel transmission; and means for determining to use the set of transmit antenna arrangements for a physical uplink control channel resource transmission, in response to two different transmission configuration indicator states being indicated and the apparatus being configured to apply physical uplink shared channel precoding for simultaneous transmission across multiple antenna arrangement physical uplink shared channel transmission.

Example 46. The apparatus of example 45, wherein at least one or more of the following applies: an antenna arrangement comprises one or more antenna panels, or an antenna arrangement comprises one or more transmission configuration indicator states.

Example 47. The apparatus of any of examples 45 to 46, further including: means for applying indicated physical uplink shared channel precoding for simultaneous transmission across multi-panel single frequency network physical uplink control channel transmission with or without repetition.

Example 48. The apparatus of any of examples 45 to 47, further including: means for receiving, from a network, a configuration to use the physical uplink shared channel precoding for simultaneous transmission across multi-panel physical uplink shared channel transmission; and means for receiving, from the network, the indication of the two different transmission configuration indicator states.

Example 49. The apparatus of any of examples 45 to 48, further including: means for computing a pathloss estimate for a transmit antenna panel based on a downlink reference signal resource for pathloss reference associated with the two indicated transmission configuration indicator states without assuming implementation losses.

Example 50. The apparatus of example 49, further including: means for computing a new pathloss estimate for the transmit antenna panel, based on the computed pathloss estimate and an antenna panel specific implementation loss with respect to a primary antenna panel.

Example 51. The apparatus of example 50, further including: means for computing the new pathloss estimate to be the computed pathloss estimate added to the antenna panel specific implementation loss.

Example 52. The apparatus of any of examples 50 to 51, further including: means for applying rank 1 restricted different precoders of simultaneous transmission across multi-panel physical uplink shared channel transmission for the transmit antenna panel.

Example 53. The apparatus of any of examples 50 to 52, further including: means for determining transmit antenna panel pairs among a set of available transmit antenna panels; and means for selecting, for a pair, the primary antenna panel and a secondary antenna panel.

Example 54. The apparatus of example 53, further including: means for computing a relative power difference between the primary antenna panel and the secondary antenna panel; means for storing, into a memory of the apparatus, the relative power difference between the primary antenna panel and the secondary antenna panel; and means for determining the antenna panel specific implementation loss with respect to the primary antenna panel, based on the relative power difference between the primary antenna panel and the secondary antenna panel.

Example 55. The apparatus of any of examples 50 to 54, further including: means for selecting the primary antenna panel among available transmit antenna panels, wherein the primary antenna panel has an implementation or insertion loss that is smaller than the other transmit antenna panels; means for computing a first power difference between the primary antenna panel and a first antenna panel of a pair of antenna panels; means for computing a second power difference between the primary antenna panel and a second antenna panel of the pair of antenna panels; means for storing, into a memory of the apparatus, the first power difference and the second power difference; and means for determining the antenna panel specific implementation loss with respect to the primary antenna panel, based on the first power difference and the second power difference.

Example 56. The apparatus of any of examples 50 to 55, further including: means for determining a first antenna panel power value using the new pathloss estimate for the transmit antenna panel within an uplink power control equation for a physical uplink control channel for a first antenna panel of a transmit antenna panel pair; and means for determining a second antenna panel power value using the new pathloss estimate for the transmit antenna panel within an uplink power control equation for a physical uplink control channel for a second antenna panel of the transmit antenna panel pair.

Example 57. The apparatus of example 56, further including: means for determining a total physical uplink control channel transmit power with adding the first antenna panel power value to the second antenna panel power value; and means for comparing the total physical uplink control channel transmit power to a physical uplink control channel transmit power budget.

Example 58. The apparatus of example 57, further including: means for applying the first antenna panel power value and the second antenna power value for the two indicated transmission configuration indicator states and a single physical uplink control channel transmission, in response to the total physical uplink control channel transmit power being less than the physical uplink control channel transmit power budget.

Example 59. The apparatus of any of examples 57 to 58, further including: means for applying, for a single physical uplink control channel transmission, the first antenna panel power value for one transmission configuration indicator state of the two different transmission configuration indicator states, or the second antenna power value for one transmission configuration indicator state of the two different transmission configuration indicator states, in response to the total physical uplink control channel transmit power being greater than or equal to the physical uplink control channel transmit power budget.

Example 60. The apparatus of any of examples 45 to 59, further including: means for storing, into a memory of the apparatus, a first layer of precoder matrices corresponding to spatial division multiplexing or single frequency network based simultaneous physical uplink shared channel transmissions, in response to receiving sounding reference signal resource indicators for the spatial division multiplexing or single frequency network based simultaneous physical uplink shared channel transmissions; means for retrieving the first layer of precoder matrices from the memory; and means for applying the first layer of precoder matrices for a set of single frequency network physical uplink control channel transmissions.

Example 61. The apparatus of any of examples 45 to 60, further including: means for applying implementation specific transmit power compensation or equalization between different antenna panels used for simultaneous physical uplink control channel transmission.

Example 62. The apparatus of any of examples 45 to 61, further including: means for scaling elements of antenna panel specific precoder vectors by an antenna panel specific implementation value for different antenna panels used for simultaneous physical uplink control channel transmission.

Example 63. The apparatus of any of examples 45 to 62, wherein different physical uplink control channel resources have same or different formats and/or periodicities.

Example 64. The apparatus of any of examples 45 to 63, wherein the apparatus comprises a user equipment.

Example 65. An apparatus including: means for configuring a user equipment to use a set of transmit antenna arrangements for spatial division multiplexing or single frequency network based simultaneous transmission across multiple antenna arrangement physical uplink shared channel transmission; and means for configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.

Example 66. The apparatus of example 65, wherein at least one or more of the following applies: an antenna arrangement comprises one or more antenna panels, or an antenna arrangement comprises one or more transmission configuration indicator states.

Example 67. The apparatus of any of examples 65 to 66, further including: means for configuring the user equipment to apply indicated physical uplink shared channel precoding for simultaneous transmission across multi-panel single frequency network physical uplink control channel transmission with or without repetition.

Example 68. The apparatus of any of examples 65 to 66, further including: means for transmitting, to the user equipment, an indication of the two different transmission configuration indicator states.

Example 69. The apparatus of any of examples 65 to 68, further including: means for receiving a single physical uplink control channel transmission, wherein a first antenna panel power value and a second antenna power value are applied for the indicated two different transmission configuration indicator states and for the single physical uplink control channel transmission, in response to a total physical uplink control channel transmit power being less than a physical uplink control channel transmit power budget.

Example 70. The apparatus of any of examples 65 to 69, further including: means for receiving a single physical uplink control channel transmission, wherein a first antenna panel power value is applied for one transmission configuration indicator state of the indicated two different transmission configuration indicator states, or a second antenna power value is applied for one transmission configuration indicator state of the two indicated different transmission configuration indicator states, in response to a total physical uplink control channel transmit power being greater than or equal to a physical uplink control channel transmit power budget.

Example 71. The apparatus of any of examples 65 to 70, wherein different physical uplink control channel resources have same or different formats and/or periodicities.

Example 72. The apparatus of any of examples 65 to 71, wherein the apparatus comprises a transmission reception point.

Example 73. The apparatus of any of examples 65 to 72, wherein the apparatus comprises a radio access network node.

Example 74. An apparatus including: at least one processor; and at least one memory storing instructions that, when executed by the at least one processor, cause the apparatus at least to: determine to use a set of transmit antenna arrangements for spatial division multiplexing or single frequency network based simultaneous transmission across multiple antenna arrangement physical uplink shared channel transmission; and determine to use the set of transmit antenna arrangements for a physical uplink control channel resource transmission, in response to two different transmission configuration indicator states being indicated and the apparatus being configured to apply physical uplink shared channel precoding for simultaneous transmission across multiple antenna arrangement physical uplink shared channel transmission.

Example 75. An apparatus including: at least one processor; and at least one memory storing instructions that, when executed by the at least one processor, cause the apparatus at least to: configure a user equipment to use a set of transmit antenna arrangements for spatial division multiplexing or single frequency network based simultaneous transmission across multiple antenna arrangement physical uplink shared channel transmission; and configure the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.

Example 76. A method including: determining to use a set of transmit antenna arrangements for spatial division multiplexing or single frequency network based simultaneous transmission across multiple antenna arrangement physical uplink shared channel transmission; and determining to use the set of transmit antenna arrangements for a physical uplink control channel resource transmission, in response to two different transmission configuration indicator states being indicated and an apparatus being configured to apply physical uplink shared channel precoding for simultaneous transmission across multiple antenna arrangement physical uplink shared channel transmission.

Example 77. A method including: configuring a user equipment to use a set of transmit antenna arrangements for spatial division multiplexing or single frequency network based simultaneous transmission across multiple antenna arrangement physical uplink shared channel transmission; and configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.

Example 78. A computer readable medium including instructions stored thereon for performing at least the following: determining to use a set of transmit antenna arrangements for spatial division multiplexing or single frequency network based simultaneous transmission across multiple antenna arrangement physical uplink shared channel transmission; and determining to use the set of transmit antenna arrangements for a physical uplink control channel resource transmission, in response to two different transmission configuration indicator states being indicated and an apparatus being configured to apply physical uplink shared channel precoding for simultaneous transmission across multiple antenna arrangement physical uplink shared channel transmission.

Example 79. A computer readable medium including instructions stored thereon for performing at least the following: configuring a user equipment to use a set of transmit antenna arrangements for spatial division multiplexing or single frequency network based simultaneous transmission across multiple antenna arrangement physical uplink shared channel transmission; and configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memories as described herein may be implemented using any suitable data storage technology, such as semiconductor based memory devices, flash memory, magnetic memory devices and systems, optical memory devices and systems, non-transitory memory, transitory memory, fixed memory and removable memory. The memories may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memories that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

It should be understood that the foregoing description is only illustrative. Various alternatives and modifications may be devised by those skilled in the art. For example, features recited in the various dependent claims could be combined with each other in any suitable combination(s). In addition, features from different example embodiments described above could be selectively combined into a new example embodiment. Accordingly, this description is intended to embrace all such alternatives, modifications and variances which fall within the scope of the appended claims.

The present disclosure may comprise the following clauses.

Clause 1. An apparatus comprising: means for determining to use a set of transmit antenna arrangements for spatial division multiplexing or single frequency network based simultaneous transmission across multiple antenna arrangement physical uplink shared channel transmission; and means for determining to use the set of transmit antenna arrangements for a physical uplink control channel resource transmission, in response to two different transmission configuration indicator states being indicated and the apparatus being configured to apply physical uplink shared channel precoding for simultaneous transmission across multiple antenna arrangement physical uplink shared channel transmission.

Clause 2. The apparatus of clause 1, wherein at least one or more of the following applies: an antenna arrangement comprises one or more antenna panels, or an antenna arrangement comprises one or more transmission configuration indicator states.

Clause 3. The apparatus of any of clauses 1 to 2, further comprising: means for applying indicated physical uplink shared channel precoding for simultaneous transmission across multi-panel single frequency network physical uplink control channel transmission with or without repetition.

Clause 4. The apparatus of any of clauses 1 to 3, further comprising: means for receiving, from a network, a configuration to use the physical uplink shared channel precoding for simultaneous transmission across multi-panel physical uplink shared channel transmission; and means for receiving, from the network, the indication of the two different transmission configuration indicator states.

Clause 5. The apparatus of any of clauses 1 to 4, further comprising: means for computing a pathloss estimate for a transmit antenna panel based on a downlink reference signal resource for pathloss reference associated with the two indicated transmission configuration indicator states without assuming implementation losses.

Clause 6. The apparatus of clause 5, further comprising: means for computing a new pathloss estimate for the transmit antenna panel, based on the computed pathloss estimate and an antenna panel specific implementation loss with respect to a primary antenna panel.

Clause 7. The apparatus of clause 6, further comprising: means for computing the new pathloss estimate to be the computed pathloss estimate added to the antenna panel specific implementation loss.

Clause 8. The apparatus of any of clauses 6 to 7, further comprising: means for applying rank 1 restricted different precoders of simultaneous transmission across multi-panel physical uplink shared channel transmission for the transmit antenna panel.

Clause 9. The apparatus of any of clauses 6 to 8, further comprising: means for determining transmit antenna panel pairs among a set of available transmit antenna panels; and means for selecting, for a pair, the primary antenna panel and a secondary antenna panel.

Clause 10. The apparatus of clause 9, further comprising: means for computing a relative power difference between the primary antenna panel and the secondary antenna panel; means for storing, into a memory of the apparatus, the relative power difference between the primary antenna panel and the secondary antenna panel; and means for determining the antenna panel specific implementation loss with respect to the primary antenna panel, based on the relative power difference between the primary antenna panel and the secondary antenna panel.

Clause 11. The apparatus of any of clauses 6 to 10, further comprising: means for selecting the primary antenna panel among available transmit antenna panels, wherein the primary antenna panel has an implementation or insertion loss that is smaller than the other transmit antenna panels; means for computing a first power difference between the primary antenna panel and a first antenna panel of a pair of antenna panels; means for computing a second power difference between the primary antenna panel and a second antenna panel of the pair of antenna panels; means for storing, into a memory of the apparatus, the first power difference and the second power difference; and means for determining the antenna panel specific implementation loss with respect to the primary antenna panel, based on the first power difference and the second power difference.

Clause 12. The apparatus of any of clauses 6 to 11, further comprising: means for determining a first antenna panel power value using the new pathloss estimate for the transmit antenna panel within an uplink power control equation for a physical uplink control channel for a first antenna panel of a transmit antenna panel pair; and means for determining a second antenna panel power value using the new pathloss estimate for the transmit antenna panel within an uplink power control equation for a physical uplink control channel for a second antenna panel of the transmit antenna panel pair.

Clause 13. The apparatus of clause 12, further comprising: means for determining a total physical uplink control channel transmit power with adding the first antenna panel power value to the second antenna panel power value; and means for comparing the total physical uplink control channel transmit power to a physical uplink control channel transmit power budget.

Clause 14. The apparatus of clause 13, further comprising: means for applying the first antenna panel power value and the second antenna power value for the two indicated transmission configuration indicator states and a single physical uplink control channel transmission, in response to the total physical uplink control channel transmit power being less than the physical uplink control channel transmit power budget.

Clause 15. The apparatus of any of clauses 13 to 14, further comprising: means for applying, for a single physical uplink control channel transmission, the first antenna panel power value for one transmission configuration indicator state of the two different transmission configuration indicator states, or the second antenna power value for one transmission configuration indicator state of the two different transmission configuration indicator states, in response to the total physical uplink control channel transmit power being greater than or equal to the physical uplink control channel transmit power budget.

Clause 16. The apparatus of any of clauses 1 to 15, further comprising: means for storing, into a memory of the apparatus, a first layer of precoder matrices corresponding to spatial division multiplexing or single frequency network based simultaneous physical uplink shared channel transmissions, in response to receiving sounding reference signal resource indicators for the spatial division multiplexing or single frequency network based simultaneous physical uplink shared channel transmissions; means for retrieving the first layer of precoder matrices from the memory; and means for applying the first layer of precoder matrices for a set of single frequency network physical uplink control channel transmissions.

Clause 17. The apparatus of any of clauses 1 to 16, further comprising: means for determining that different physical uplink control channel resources with the same physical uplink control channel format follow simultaneous transmission across multi-panel physical uplink shared channel precoding, in response to a Boolean follow physical uplink shared channel simultaneous transmission across multi-panel precoder information element being configured as resource specific, or means for determining that different physical uplink control channel resources with different physical uplink control channel formats follow simultaneous transmission across multi-panel physical uplink shared channel precoding, in response to a Boolean follow physical uplink shared channel simultaneous transmission across multi-panel precoder information element being configured as resource specific.

Clause 18. An apparatus comprising: means for configuring a user equipment to use a set of transmit antenna arrangements for spatial division multiplexing or single frequency network based simultaneous transmission across multiple antenna arrangement physical uplink shared channel transmission; and means for configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.

Clause 19. The apparatus of clause 18, wherein at least one or more of the following applies: an antenna arrangement comprises one or more antenna panels, or an antenna arrangement comprises one or more transmission configuration indicator states.

Clause 20. The apparatus of any of clauses 18 to 19, further comprising: means for configuring the user equipment to apply indicated physical uplink shared channel precoding for simultaneous transmission across multi-panel single frequency network physical uplink control channel transmission with or without repetition.

Clause 21. The apparatus of any of clauses 18 to 20, further comprising: means for receiving a single physical uplink control channel transmission, wherein a first antenna panel power value and a second antenna power value are applied for the indicated two different transmission configuration indicator states and for the single physical uplink control channel transmission, in response to a total physical uplink control channel transmit power being less than a physical uplink control channel transmit power budget.

Clause 22. The apparatus of any of clauses 18 to 21, further comprising: means for receiving a single physical uplink control channel transmission, wherein a first antenna panel power value is applied for one transmission configuration indicator state of the indicated two different transmission configuration indicator states, or a second antenna power value is applied for one transmission configuration indicator state of the two indicated different transmission configuration indicator states, in response to a total physical uplink control channel transmit power being greater than or equal to a physical uplink control channel transmit power budget.

Clause 23. The apparatus of any of clauses 18 to 22, wherein: different physical uplink control channel resources with the same physical uplink control channel format follow simultaneous transmission across multi-panel physical uplink shared channel precoding, when a Boolean follow physical uplink shared channel simultaneous transmission across multi-panel precoder information element is configured as resource specific, or different physical uplink control channel resources with different physical uplink control channel formats follow simultaneous transmission across multi-panel physical uplink shared channel precoding, when a Boolean follow physical uplink shared channel simultaneous transmission across multi-panel precoder information element is configured as resource specific.

Clause 24. A method comprising: determining to use a set of transmit antenna arrangements for spatial division multiplexing or single frequency network based simultaneous transmission across multiple antenna arrangement physical uplink shared channel transmission; and determining to use the set of transmit antenna arrangements for a physical uplink control channel resource transmission, in response to two different transmission configuration indicator states being indicated and an apparatus being configured to apply physical uplink shared channel precoding for simultaneous transmission across multiple antenna arrangement physical uplink shared channel transmission.

Clause 25. A method comprising: configuring a user equipment to use a set of transmit antenna arrangements for spatial division multiplexing or single frequency network based simultaneous transmission across multiple antenna arrangement physical uplink shared channel transmission; and configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.

The following acronyms and abbreviations that may be found in the specification and/or the drawing figures are given as follows (the abbreviations and acronyms may be appended/combined with each other or with other characters using e.g. a dash, hyphen, slash, or number, and may be case insensitive):
- 3GPP: third generation partnership project
- 4G: fourth generation
- 5G: fifth generation
- 5GC: 5G core network
- 6G: sixth generation
- ACK: acknowledgement
- AMF: access and mobility management function
- ASIC: application-specific integrated circuit
- ASN: abstract syntax notation
- BWP: bandwidth part
- CD: compact/computer disc
- CE: control element
- CPU: central processing unit
- CSI: channel state information
- CSI-RS: channel state information reference signal
- CU: central unit or centralized unit
- DCI: downlink control information
- DL: downlink
- DMRS: demodulation reference signal
- DSP: digital signal processor
- DU: distributed unit
- DVD: digital versatile disc
- eNB: evolved Node B (e.g., an LTE base station)
- EN-DC: E-UTRAN new radio - dual connectivity
- en-gNB: node providing NR user plane and control plane protocol terminations towards the UE, and acting as a secondary node in EN-DC
- E-UTRA: evolved UMTS terrestrial radio access, i.e., the LTE radio access technology
- E-UTRAN: E-UTRA network
- F1: interface between the CU and the DU
- FPGA: field-programmable gate array
- gNB: base station for 5G/NR, i.e., a node providing NR user plane and control plane protocol terminations towards the UE, and connected via the NG interface to the 5GC
- HARQ: hybrid automatic repeat request
- IAB: integrated access and backhaul
- IE: information element
- I/F: interface
- I/O: input/output
- LMF: location management function
- LTE: long term evolution (4G)
- MAC: medium access control
- M-DCI: multi downlink control information
- MME: mobility management entity
- MRO: mobility robustness optimization
- NCE: network control element
- ng or NG: new generation
- ng-eNB: new generation eNB
- NG-RAN: new generation radio access network
- Nr: number (e.g. pucch-RepetitionNrofSlots)
- NR: new radio
- N/W: network
- NZP: non-zero power
- PA: power amplifier
- PBCH: physical broadcast channel
- PDA: personal digital assistant
- PDCCH: physical downlink control channel
- PDCP: packet data convergence protocol
- PDSCH: physical downlink shared channel
- PHY: physical layer
- PRB: physical resource block
- Prec: precoder
- PUCCH: physical uplink control channel
- PUSCH: physical uplink shared channel
- QCL: quasi co location
- RAM: random access memory
- RAN: radio access network
- Rel: release
- RF: radio frequency
- RLC: radio link control
- ROM: read-only memory
- RRC: radio resource control
- RS: reference signal
- RU: radio unit
- Rx, RX: receive, or receiver, or reception
- SDAP: service data adaptation protocol
- S-DCI: single downlink control information
- SDM: spatial domain multiplexing
- SFN: single-frequency network
- SGW: serving gateway
- SMF: session management function
- SON: self-organizing/optimizing network
- SRI: SRS resource identity
- SRS: sounding reference signal
- SS: synchronization signal
- SSB: synchronization signal block or synchronization signal and PBCH block
- sTRP: single TRP
- STxMP: simultaneous transmission across multi-panel
- TCI: transmission configuration indicator
- TPMI: transmit precoding matrix identity
- TRP: transmission and reception point
- TS: technical specification
- Tx, TX: transmit, or transmitter, or transmission
- typeD: for use with or indicates a spatial RX parameter
- UAV: unmanned aerial vehicle
- UE: user equipment (e.g., a wireless, typically mobile device)
- UI: user interface
- UL: uplink
- UMTS: Universal Mobile Telecommunications System
- UPF: user plane function
- USB: universal serial bus
- X2: network interface between RAN nodes and between RAN and the core network
- Xn: network interface between NG-RAN nodes

## Claims

1. An apparatus comprising:
means for determining to use a set of transmit antenna arrangements for spatial division multiplexing or single frequency network based simultaneous transmission across multiple antenna arrangement physical uplink shared channel transmission; and
means for determining to use the set of transmit antenna arrangements for a physical uplink control channel resource transmission, in response to two different transmission configuration indicator states being indicated and the apparatus being configured to apply physical uplink shared channel precoding for simultaneous transmission across multiple antenna arrangement physical uplink shared channel transmission.

2. The apparatus of claim 1, wherein at least one or more of the following applies:
an antenna arrangement comprises one or more antenna panels, or
an antenna arrangement comprises one or more transmission configuration indicator states.

3. The apparatus of any of claims 1 to 2, further comprising:
means for applying indicated physical uplink shared channel precoding for simultaneous transmission across multi-panel single frequency network physical uplink control channel transmission with or without repetition.

4. The apparatus of any of claims 1 to 3, further comprising:
means for receiving, from a network, a configuration to use the physical uplink shared channel precoding for simultaneous transmission across multi-panel physical uplink shared channel transmission; and
means for receiving, from the network, the indication of the two different transmission configuration indicator states.

5. The apparatus of any of claims 1 to 4, further comprising:
means for computing a pathloss estimate for a transmit antenna panel based on a downlink reference signal resource for pathloss reference associated with the two indicated transmission configuration indicator states without assuming implementation losses.

6. The apparatus of claim 5, further comprising:
means for computing a new pathloss estimate for the transmit antenna panel, based on the computed pathloss estimate and an antenna panel specific implementation loss with respect to a primary antenna panel.

7. The apparatus of claim 6, further comprising:
means for computing the new pathloss estimate to be the computed pathloss estimate added to the antenna panel specific implementation loss.

8. The apparatus of any of claims 6 to 7, further comprising:
means for selecting the primary antenna panel among available transmit antenna panels, wherein the primary antenna panel has an implementation or insertion loss that is smaller than the other transmit antenna panels;
means for computing a first power difference between the primary antenna panel and a first antenna panel of a pair of antenna panels;
means for computing a second power difference between the primary antenna panel and a second antenna panel of the pair of antenna panels;
means for storing, into a memory of the apparatus, the first power difference and the second power difference; and
means for determining the antenna panel specific implementation loss with respect to the primary antenna panel, based on the first power difference and the second power difference.

9. The apparatus of any of claims 6 to 8, further comprising:
means for determining a first antenna panel power value using the new pathloss estimate for the transmit antenna panel within an uplink power control equation for a physical uplink control channel for a first antenna panel of a transmit antenna panel pair; and
means for determining a second antenna panel power value using the new pathloss estimate for the transmit antenna panel within an uplink power control equation for a physical uplink control channel for a second antenna panel of the transmit antenna panel pair.

10. The apparatus of any of claims 1 to 9, further comprising:
means for storing, into a memory of the apparatus, a first layer of precoder matrices corresponding to spatial division multiplexing or single frequency network based simultaneous physical uplink shared channel transmissions, in response to receiving sounding reference signal resource indicators for the spatial division multiplexing or single frequency network based simultaneous physical uplink shared channel transmissions;
means for retrieving the first layer of precoder matrices from the memory; and
means for applying the first layer of precoder matrices for a set of single frequency network physical uplink control channel transmissions.

11. The apparatus of any of claims 1 to 10, further comprising:
means for determining that different physical uplink control channel resources with the same physical uplink control channel format follow simultaneous transmission across multi-panel physical uplink shared channel precoding, in response to a Boolean follow physical uplink shared channel simultaneous transmission across multi-panel precoder information element being configured as resource specific, or
means for determining that different physical uplink control channel resources with different physical uplink control channel formats follow simultaneous transmission across multi-panel physical uplink shared channel precoding, in response to a Boolean follow physical uplink shared channel simultaneous transmission across multi-panel precoder information element being configured as resource specific.

12. An apparatus comprising:
means for configuring a user equipment to use a set of transmit antenna arrangements for spatial division multiplexing or single frequency network based simultaneous transmission across multiple antenna arrangement physical uplink shared channel transmission; and
means for configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.

13. The apparatus of claim 12, wherein at least one or more of the following applies:
an antenna arrangement comprises one or more antenna panels, or
an antenna arrangement comprises one or more transmission configuration indicator states.

14. A method comprising:
determining to use a set of transmit antenna arrangements for spatial division multiplexing or single frequency network based simultaneous transmission across multiple antenna arrangement physical uplink shared channel transmission; and
determining to use the set of transmit antenna arrangements for a physical uplink control channel resource transmission, in response to two different transmission configuration indicator states being indicated and an apparatus being configured to apply physical uplink shared channel precoding for simultaneous transmission across multiple antenna arrangement physical uplink shared channel transmission.

15. A method comprising:
configuring a user equipment to use a set of transmit antenna arrangements for spatial division multiplexing or single frequency network based simultaneous transmission across multiple antenna arrangement physical uplink shared channel transmission; and
configuring the user equipment to use the set of transmit antenna arrangements for a physical uplink control channel resource transmission, in response to two different transmission configuration indicator states being indicated and the user equipment being configured to apply physical uplink shared channel precoding for simultaneous transmission across multiple antenna arrangement physical uplink shared channel transmission.
